# FASCICULE DE BREVET EUROPEEN

(11) **EP 2 359 317 B1**
(45) Date de publication et mention de la délivrance du brevet: **20.03.2013**
(21) Numéro de dépôt: 09795469.7
(22) Date de dépôt: 19.11.2009
(51) Int. Cl.: G06K 19/06, G06K 19/14

(54) **PROCEDE DE TEXTURATION ALEATOIRE RECONFIGURABLE D'UN ELEMENT PHOTOCHROMIQUE ET PROCEDE DE SECURISATION ET/OU AUTHENTIFICATION METTANT EN OEUVRE CE PROCEDE**
VERFAHREN ZUR UMKONFIGURIERBAREN ZUFÄLLIGEN TEXTURIERUNG EINER PHOTOCHROMATISCHEN KOMPONENTE UND DIESES IMPLEMENTIERENDES SICHERHEITS- UND/ODER AUTHENTIFIKATIONSVERFAHREN
METHOD FOR RECONFIGURABLE RANDOM TEXTURING OF A PHOTOCHROMATIC COMPONENT AND SECURITY AND/OR AUTHENTICATION METHOD IMPLEMENTING SAME

(30) Priorité: 20.11.2008 FR 0857885
(43) Date de publication de la demande: 24.08.2011
(73) Titulaire: Signoptic Technologies, 73370 le Bourget du Lac (FR)
(72) Inventeur: FOURNEL, Thierry, F-42330 Saint-Galmier (FR); BOUTANT, Yann, F-73310 Chindrieux (FR); BOIS, Laurence, F-69004 Lyon (FR); DESTOUCHES-CASTAGNA, Nathalie, F-42000 Saint-Etienne (FR)
(74) Mandataire: Blanchard, Eugène Gilles
(86) Numéro de dépôt international: PCT/FR2009/052222
(87) Numéro de publication internationale: WO 2010/058131

(56) Documents cités:
- WO-A-03/058292
- US-A1- 2004 043 301
- US-B1- 7 052 812

## Description

La présente invention concerne un procédé de texturation aléatoire d'un élément matériel photochromique, ainsi qu'un procédé de sécurisation et/ou authentification de données ou d'objets utilisant un tel procédé de génération de textures aléatoires.

L'objet de l'invention trouve notamment des applications particulièrement avantageuses dans les domaines de la sécurisation d'objets ou de données et/ou leur authentification.

Le procédé de la présente invention permet ainsi la génération d'états macroscopiques aléatoires par modification d'une partie au moins des caractéristiques structurelles d'un élément matériel sujet photochromique au moyen d'un champ lumineux à modulation spatiale aléatoire d'intensité, soit en vue d'identifier cet élément matériel sujet, soit en vue d'identifier conjointement l'élément matériel sujet et un élément matériel secondaire ayant servi à la mise en forme du champ lumineux inhomogène aléatoire incident. La structure de l'élément matériel ainsi modifiée conserve variabilité et stabilité à l'échelle d'obervation de sorte que l'acquisition d'un signal à cette échelle fournit une image de texture aléatoire caractéristique de l'élément matériel sujet.

Le signal obtenu est utilisable notamment pour identifier l'élément matériel sujet lui-même, le cas échéant dans le cadre de l'authentification de produits manufacturés ou encore pour la sécurisation d'information par le biais du signal d'acquisition obtenu, caractéristique de la structure modifiée de l'élément matériel sujet.

Cette problématique d"'identification et/ou de sécurisation par la matière" requiert que l'élément matériel sujet présente à l'échelle d'observation, et typiquement dans une gamme d'échelles allant du micromètre au millimètre, des caractéristiques structurelles discriminantes définissant l'état macroscopique de l'élément matériel sujet, en termes de morphologie, de composition chimique ou physico-chimique, ou de couleur induite par la morphologie et/ou la composition chimique ou physico-chimique.

Dans le domaine de l'authentification des produits manufacturés, il doit être impossible en pratique ou quasiment impossible de reproduire physiquement ces caractéristiques.

Dans l'état de la technique, il a déjà été proposé différentes solutions pour sécuriser et/ou authentifier par une signature aléatoire extraite de la matière des objets ou données.

On connaît en particulier des demandes de brevets FR 2895543 A1 et FR 2866139 A1 des procédés d'extraction de signatures aléatoires et de protection contre la lecture d'informations sensibles à partir de matières naturelles, notamment de matières fibreuses telles que le papier, qui présentent une grande complexité structurelle, un aspect chaotique à différentes échelles, et surtout une quasi-invariance. Toutefois, ces procédés sont limités par leur caractère irréversible. En effet, il s'agit de se prémunir de la menace d'un leurre potentiel de lecture à la suite du détournement d'une acquisition de la structure de l'élément matériel sujet à l'échelle macroscopique lors d'une lecture antérieure.

On connaît également d'autres technologies d'identification, authentification basées sur les caractéristiques intrinsèques de la matière. Cependant, ces technologies sont également irréversibles.

On connaît également par ailleurs des techniques d'inscription et d'enregistrement de données par illumination de matériaux photosensibles à l'aide de faisceaux lumineux. On peut citer à titre d'exemples les procédés décrits dans les documents US 2004/043301; US 7 052 812 et WO 03/058292.

Ces différents procédés reposent tous sur des principes d'illumination et de texturation de matériaux déterministes. En particulier, dans ces différents procédés, les champs lumineux utilisés pour inscrire les données dans un matériau photosensible sont structurés selon les données à enregistrer, c'est-à-dire que les propriétés des champs lumineux sont déterminées par les données à enregistrer avant illumination des matériaux photosensibles d'enregistrement. La texturation de ces matériaux est donc directement liée à la nature des données inscrites et peut donc être reproduite.

La présente invention vise à fournir une solution d'identification par la matière qui ne souffre pas les inconvénients rencontrés avec les techniques de l'art antérieur. L'invention vise notamment à fournir une solution d'identification par un code ou identifiant unique, de nature aléatoire et sensiblement impossible à reproduire à l'identique

Ainsi, l'invention propose selon un premier objet un procédé de texturation aléatoire d'un élément matériel photochromique comprenant une matrice stable au sein de laquelle sont réparties de façon chaotique des agents photosensibles mobiles. Conformément à ce procédé, on insole le matériau photochromique au moyen d'un champ lumineux variable et aléatoire provoquant la réduction des agents photosensibles au sein de la matrice et leur migration aléatoire pour atteindre un nouvel agencement aléatoire desdits agents photosensibles dans ladite matrice.

On entend ici par champ lumineux aléatoire que son intensité varie spatialement de manière aléatoire. Ainsi, selon le procédé de l'invention, la texture conférée au matériau photochromique de l'élément matériel sujet peut dépendre de deux paramètres aléatoires indépendants que sont d'une part le champ lumineux d'insolation et d'autre part l'agencement aléatoire des agents photosensibles au sein de la matrice du matériau photochromique. On peut ainsi extraire de la structure aléatoire obtenue un code ou une signature d'identification unique, irreproductible, dans la mesure où à la fois le champ lumineux et la migration des agents lumineux sont aléatoires et indépendants. De plus, une fois une première texturation donnée, il est possible de la remplacer par une nouvelle simplement en procédant à une nouvelle illumination à l'aide du champ lumineux aléatoire. La texture obtenue n'est donc pas figée mais réversible et reconfigurable de manière également aléatoire.

Dans une forme préférée de mise en oeuvre du procédé de l'invention, le champ lumineux d'insolation de l'élément matériel photochromique résulte de la lumière transmise et/ou réfléchie par un élément matériel intermédiaire placé sur le chemin optique d'un faisceau lumineux incident et dont les caractéristiques physiques font varier spatialement l'intensité du champ lumineux.

En variante, le champ lumineux variable et aléatoire peut également résulter de la lumière transmise et/ou réfléchie par un système optique et/ou numérique utilisant une clé matérielle ou numérique.

De façon avantageuse, le faisceau lumineux est de préférence un faisceau de lumière cohérente ou quasi-cohérente, le champ lumineux d'insolation résultant étant alors un champ de tavelures.

De préférence encore, le faisceau lumineux incident est un faisceau de lumière incohérente structurée.

Conformément à une caractéristique particulière du procédé de l'invention, on fait varier intensité spatialement et/ou la divergence du champ lumineux d'insolation par l'intermédiaire d'un système optique.

Toujours selon le procédé de l'invention, l-insolation de l'élément matériel photochromique est avantageusement effectuée au moyen d'un champ lumineux dont le spectre est au moins partiellement situé dans le domaine ultra-violet.

Il est également avantageux de stabiliser, le cas échéant, l'agencement aléatoire des éléments photosensibles dans l'élément matériel photochromique après insolation d'une part par un traitement chimique et/ou physique destiné à éliminer les agents photosensibles non réduits et/ou d'autre part par un traitement physique et/ou chimique destiné à protéger les agents photosensibles réduits de rayonnements lumineux parasites.

Conformément à une autre caractéristique préférée de l'invention, l'élément matériel photochromique comporte une matrice d'oxyde de titane (TiO₂) poreux dont la taille des pores est inférieure à 10² nanomètres et contenant des agents photosensibles tels que des sels d'argent, d'or ou de platine, ou encore des complexes d'argent.

Un second objet de la présente invention concerne également un procédé de génération d'un nouvel agencement aléatoire d'agents photosensibles réduits dans la matrice stable et poreuse d'un élément matériel photochromique dont la structure à été modifiée selon le procédé de texturation aléatoire décrit ci-avant. Ce procédé est caractérisé en ce que l'on efface l'agencement aléatoire d'agents photosensibles réduits obtenu après une première insolation de l'élément matériel photochromique et en ce que l'on procède à une nouvelle insolation à l'aide d'un champ lumineux variable spatialement.

Selon une forme préférée de mise en oeuvre de ce procédé, on efface l'agencement aléatoire antérieur des agents photosensibles réduits par insolation de l'élément matériel photochromique au moyen d'un faisceau lumineux dont le spectre est situé au moins partiellement dans le domaine visible.

Toujours selon ce procédé et dans certains cas particuliers de mise en oeuvre de celui-ci, on élimine le cas échéant avant l'effacement, la protection des agents photosensibles réduits préalablement introduite lors d'une étape de stabilisation antérieure telle que précédemment décrite et/ou on recharge la matrice de l'élément matériel photochromique en agents photosensibles non réduits notamment suite à une élimination de tels agents lors d'une dite étape de stabilisation.

Un troisième objet de l'invention concerne par ailleurs un procédé de sécurisation et/ou d'authentification de donnée(s) ou d'objet(s) dans lequel :
a) on inscrit une figure d'un champ lumineux variable spatialement au sein d'un élément matériel photochromique conformément au procédé de texturation aléatoire précédemment défini, ladite figure étant déformée selon l'agencement des agents photosensibles et conférant une texture aléatoire à l'élément matériel photochromique;
b) on sonde l'élément matériel photochromique ;
c) on extrait un signal ou une image de la texture aléatoire et/ou une signature extraite de cette texture pour sécuriser un objet et/ou des données.

Selon une caractéristique préférée de ce procédé, à l'étape c) on enregistre le signal ou l'image de la texture aléatoire et/ou la signature extraite comme référence dans une base de données et/ou sur l'élément matériel photochromique ou encore sur un objet à sécuriser et/ou authentifier, puis :
- on sonde à nouveau l'élément matériel photochromique;
- on forme un signal ou une image de la texture aléatoire et/ou une signature extraite ;
- on compare le signal ou l'image de la texture aléatoire et/ou la signature extraite au signal ou à l'image de la texture aléatoire et/ou à la signature extraite enregistré en référence pour authentifier l'objet.

Selon une caractéristique préférée de ce procédé, l'étape d'enregistrement se fait selon un protocole sécurisé.

Selon une autre caractéristique préférée de ce procédé, on efface la texturation aléatoire de l'élément matériel photochromique selon la technique précédemment introduite puis on procède à nouveau aux étapes a) à c).

Toujours selon le procédé de sécurisation de l'invention, on extrait une signature aléatoire de l'agencement aléatoire des agents photosensibles réduits dans l'élément matériel photochromique, la signature aléatoire constituant une clé ou un paramètre de fonction cryptographique(s) et/ou stéganographique(s).

Toujours selon l'invention, le matériau photochromique dans lequel est inscrit une texturation aléatoire est déposé sur une partie au moins d'un objet à sécuriser et/ou authentifier.

La mise en oeuvre et l'exploitation des procédés de l'invention trouvent une application particulièrement intéressante dans le cadre de la création et l'exploitation de codes graphiques tels que les codes à barres ou les codes Datamatrix par exemple. En effet, selon l'invention et les procédés précédemment définis de celle-ci il est possible de réaliser un code graphique de quelque type qu'il soit, composé d'un arrangement d'éléments unitaires déterminé et dont, conformément à l'invention, au moins un élément unitaire est texturé conformément au procédé de texturation aléatoire de l'invention et peut être, le cas échéant, modifié et reconfiguré conformément au procédé de génération d'un nouvel agencement aléatoire de l'invention.

La réalisation d'un tel code graphique, dont au moins un élément est texturé aléatoirement conformément à l'invention, permet de rendre ce code quasi-infalsifiable. En effet, il est possible en jouant sur la variabilité du champ lumineux d'insolation de donner une troisième dimension de texture aux éléments unitaires du code. Une telle texture est impossible à reproduire sans connaître les paramètres d'illumination ayant servi à générer cette texture ni l'agencement aléatoire d'agents photosensibles dans le matériau photochromique au niveau de l'élément unitaire texturé du code.

Diverses autres caractéristiques ressortent de la description faite ci-dessous en référence aux dessins annexés qui montrent, à titre d'exemples non limitatifs, des formes de réalisation de l'objet de l'invention.
La **figure 1** représente schématiquement le procédé d'inscription d'une texture aléatoire dans un matériau photochromique de l'invention,
La **figure 2** représente une figure de tavelures enregistrée sur un capteur matriciel situé dans le champ de tavelures,
La **figure 3** représente une image de l'état macroscopique aléatoire d'un élément matériel sujet photochromique après inscription d'une texture aléatoire conformément au procédé de l'invention,
La **figure 4** représente schématiquement une coupe de la couche de matériau photochromique utile à la mise en oeuvre du procédé de l'invention et vue à l'état microscopique,
La **figure 5** est une vue analogue à celle de la **figure 4** représentant l'état microscopique d'une couche de matériau photochromique, après mise en oeuvre du procédé de l'invention,
La **figure 6** représente un dispositif d'insolation d'un élément photochromique sujet pour la mise en oeuvre du procédé de texturation aléatoire de la présente invention,
La **figure 7** est une photographie d'un état macroscopique aléatoire d'un matériau photochromique obtenu par insolation en lumière UV conformément au procédé de texturation aléatoire de l'invention,
Les **figures 8A** et **8B** représentent deux figures de tavelures inscrites dans un matériau photochromique sujet suivant le procédé de l'invention et présentant des dimensions caractéristiques différentes observées à la même échelle,
Les figures **9A** et **9B** montrent respectivement une image d'une partie d'un matériau photochromique sur un élément matériel sujet prise avant et après effacement d'une texture aléatoire par insolation à 488 nm en lumière visible.

La présente invention concerne selon un premier objet un procédé de modification de la structure d'un élément matériel sujet présentant des propriétés ou étant revêtu d'un matériau à propriétés photochromiques.

Ce procédé consiste essentiellement à figer dans un dit élément matériel sujet photochromique par insolation lumineuse un signal ou un bruit qui va être déformé par la matière dudit élément matériel de telle sorte que l'état de la structure de l'élément matériel est après insolation, à la fois caractéristique du bruit figé et de l'élément matériel lui-même.

A partir de cet élément matériel modifié, il est possible de réaliser une photographie de la texture de l'élément matériel modifié et au moyen de cette photographie d'extraire une signature permettant la sécurisation et/ou authentification d'un objet sur lequel l'élément matériel est apposé ou de données par exemple.

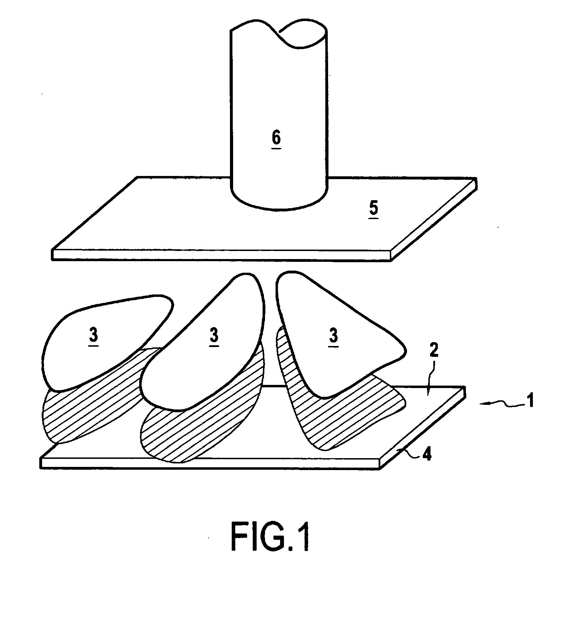

Comme représenté schématiquement sur les **figures 1****,** **4, 5** et **6**, le procédé de l'invention consiste à insoler un élément matériel sujet **1** constitué ou revêtu d'un matériau photochromique **2** à l'aide d'un champ lumineux **3** fortement variable. L'élément matériel sujet **1** peut notamment se présenter sous la forme d'un échantillon massif à identifier ou sécuriser par exemple, ou encore sous forme d'un dépôt de matériau photochromique **2** solidaire d'un substrat **4.**

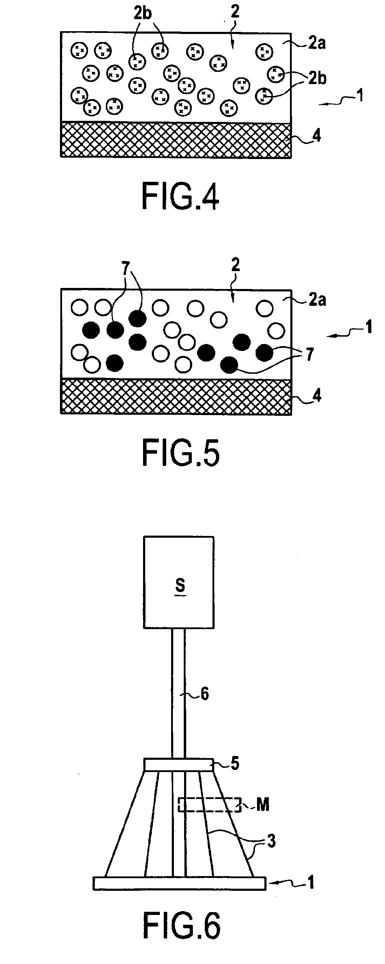

Comme cela ressort de façon schématique des **figures 4, 5** et **6****,** le matériau photochromique **2** présente de façon préférée, au moins dans des gammes d'échelles inférieures à l'échelle d'observation, typiquement le nanomètre, la dizaine de nanomètres voire la centaine de nanomètres, deux composantes, l'une rigide ou quasi-rigide et poreuse qui forme une matrice **2a,** l'autre non rigide, constituée d'un ensemble d'agents photosensibles **2b,** mobiles sous certaines conditions au sein de la matrice **2a** sous l'effet d'un champ lumineux d'insolation **3.** La matrice **2a** et les agents photosensibles **2b** déterminent ainsi l'état microscopique du matériau photochromique **2** ainsi que l'état macroscopique de l'élément matériel sujet **1,** et notamment sa morphologie. On entend ici par "échelle d'observation" le domaine de l'imagerie optique en champ lointain.

Lors d'une insolation d'un dit élément matériel sujet **1** comprenant une couche de matériau photochromique **2** au moyen d'un champ lumineux variable **3,** ledit champ lumineux provoque au sein de la matrice **2b** du matériau photochromique une migration et une réduction des agents photosensibles **2b** pour atteindre un nouvel agencement aléatoire desdits agents photosensibles **2b** dans ladite matrice **2a,** conférant ainsi au matériau photochromique **2** et l'élément sujet **1** une nouvelle structure, observable aux échelles microscopique et macroscopique respectivement.

Généralement, toute insolation occasionne le changement d'état atomique de tout ou partie des agents **2b** ainsi que leur migration au sein de la matrice **2a** du matériau photochromique. La répartition des agents **2b** dans la matrice **2a** est aléatoire, de sorte que les états microscopique et macroscopique du matériau photochromique **2** et de l'élément matériel sujet **1** eux-mêmes sont aléatoires, aussi bien avant insolation qu'après insolation.

Parmi les matrices **2a** utilisables pour réaliser le matériau photochromique **2** utile au procédé de l'invention, on peut citer pour leurs caractères photocatalytiques différents oxydes métalliques, en particulier l'oxyde de titane TiO₂.

En tant qu'agents photosensibles **2b** on peut utiliser de préférence les sels d'argent (le nitrate, l'acétate, le perchlorate, le chlorure, etc.) et les complexes d'argent mais aussi les sels d'or ou de platine. De plus, l'usage de co-catalyseurs tels que l'or, le palladium, le platine, peut permettre d'améliorer l'efficacité du phénomène de photochromie au sein du matériau photochromique.

L'intensité lumineuse dans une section du champ lumineux d'insolation **3** de l'élément matériel sujet **1** constitue dans le cadre de l'invention une "figure" fortement variable, dont la résolution est modifiable en déplaçant l'élément matériel sujet **1** dans le champ lumineux **3.**

Si la "figure" définie par l'intensité du champ lumineux **3** d'insolation peut résulter essentiellement de la nature d'une lumière incidente **6** illuminant l'élément matériel sujet **1,** cette figure peut par ailleurs être générée et modifiée, en utilisant ou non un système optique, par illumination d'un élément matériel "intermédiaire" ou "secondaire" **5** disposé sur le chemin optique d'un faisceau de lumière incidente **6** entre la source dudit faisceau **6** et l'élément matériel sujet **1**. Dans ce second cas, l'élément matériel intermédiaire **5** constitue par ses caractéristiques physiques (de rugosité, d'hétérogénéité, etc.) une source de forte variabilité du champ lumineux **3** résultant de l'interaction entre le faisceau lumineux incident **6** et ledit élément matériel **5**.

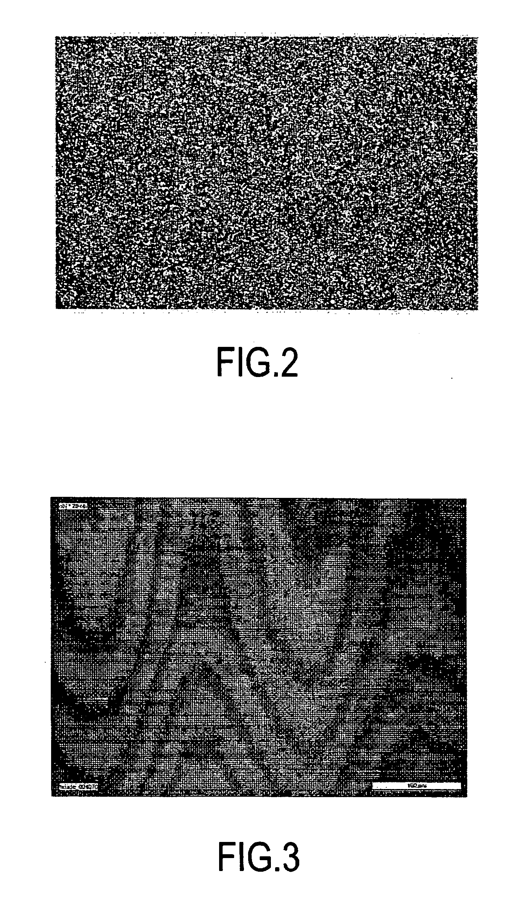

Lorsque l'élément matériel intermédiaire **5** est un élément diffusant éclairé en lumière **6** cohérente ou quasi-cohérente voire partiellement cohérente, le champ lumineux **3** résultant est alors un champ dit de "speckle" ou de "tavelures" en français. Ce sont alors ces tavelures qui constituent une figure inscriptible dans le matériau photochromique **2** de l'élément matériel sujet **1.** Une telle figure de tavelures, enregistrée sur un capteur matriciel placé dans un champ de tavelures, est pour exemple représentée sur la **figure 2****.**

Le champ lumineux **3** peut aussi résulter de la lumière diffusée après transmission ou réflexion d'une lumière incidente **6** non cohérente sur l'élément matériel intermédiaire **5.**

Un système optique non représenté sur les **figures 1** et **6****,** peut en outre être positionné après l'élément matériel intermédiaire **5** pour régler la divergence ou accroître la variabilité du champ lumineux d'insolation **3.**

Comme cela ressort ainsi de ce qui précède, le champ lumineux **3** d'insolation a pour fonction première dans le cadre du procédé de l'invention de moduler aléatoirement la concentration par unité de surface des agents photosensibles **2b** au sein de la matrice **2a** du matériau photochromique **2** de l'élément matériel sujet **1** soumis à insolation.

Cette modulation entraîne un phénomène de migration et une réduction chimiques des agents photosensibles 2b au sein de la matrice poreuse 2a, provoquant, comme cela ressort plus particulièrement des figures 4 et 5, la formation de particules 7 dont la concentration et la répartition dans la matrice 2a dépendent à la fois de la modulation d'intensité du faisceau lumineux 3 d'insolation, donc de la figure incidente inscrite dans le matériau photochromique 2, et de la répartition spatiale des agents photosensibles 2b dans ladite matrice 2a au moment de l'insolation, donc de l'état microscopique courant du matériau photochromique 2 de l'élément sujet 1.

Le procédé de l'invention conduit ainsi à figer dans la matrice poreuse **2a** du matériau photochromique **2** une figure lumineuse incidente aléatoire qui est de plus déformée lors de son inscription dans le matériau **2** en fonction de l'état microscopique de ce dernier.

A l'échelle macroscopique d'observation, les phénomènes combinés de réduction et de migration des agents photosensibles **2b** au sein de la matrice **2a** du matériau photochromique **2** sous l'insolation d'un champ lumineux **3** confèrent un «état macroscopique aléatoire» stable du matériau photochromique **2,** observable en trois dimensions ou moins, dont il est possible de faire une image conforme à celle de la **figure 3****,** exploitable à des fins de sécurisation et/ou d'authentification de l'élément matériel sujet supportant ou comportant le matériau photochromique ou de données enregistrées sur tout type de support.

L'état macroscopique du matériau photochromique sur l'élément matériel sujet est qualifié d'aléatoire, dans le sens où il est non prédictible a priori, cela du fait d'une part du caractère aléatoire de l'état microscopique initial du matériau photochromique **2** et d'autre part de la forte variabilité du champ lumineux d'insolation **3** mis en oeuvre.

La photo-inscription d'une figure lumineuse peut être limitée sur l'élément matériel sujet **1** à une zone réduite du matériau photochromique **2** ou un ensemble de zones connexes réduites à formes quelconques sur la surface dudit matériau **2.**

La photo-inscription sur l'élément matériel sujet **1** d'une figure limitée à un ensemble de zones connexes réduites réalise un code graphique dont les éléments codants non nuls ou "taches" correspondent aux zones connexes réduites. Chacune de ces taches résulte d'une texturation aléatoire du matériau photochromique **2** au sein de l'élément matériel sujet dans une zone connexe considérée, qui modifie localement et de façon unique les caractéristiques structurelles de cette zone connexe, rendant sa reproduction à l'identique impossible ou quasi-impossible à l'échelle d'observation.

Les caractéristiques statistiques d'une tache sont ajustables en jouant sur les paramètres de la génération du champ lumineux **3** (paramètres du faisceau lumineux incident **6,** choix de l'élément matériel secondaire **5** ou de la zone qui l'illumine, divergence du champ lumineux **3** par exemple en jouant sur les paramètres d'une l'optique placée en aval de sa génération) et/ou sur la position de l'élément matériel sujet **1** dans le champ lumineux **3.**

Par la suite, la caractérisation statistique dans le signal d'acquisition de la texture aléatoire d'une tache confère au code graphique, après quantification, une dimension supplémentaire.

La réinscription d'un même code graphique au même endroit présente des caractéristiques structurelles au niveau des taches propres à l'instant de photo-inscription qui permettent de distinguer la réinscription de toute inscription antérieure.

Afin de garantir la stabilité de l'état macroscopique ou la texture aléatoire du matériau photochromique **2** obtenu après insolation, la durée d'insolation dudit matériau est choisie suffisamment longue pour réduire la quasi-totalité des agents photosensibles **2b.** En pratique, la durée d'insolation est ainsi de l'ordre de 1 à 3 minutes, en fonction de la surface de matériau photochromique **2** à insoler et de la nature et la concentration de agents photosensibles **2b** répartis de façon aléatoire au sein de la matrice **2a** de celui-ci.

Pour les cas où l'insolation ne serait pas suffisamment longue pour réduire la totalité des agents **2b** dans la matrice **2a,** le procédé de l'invention propose avantageusement d'éliminer ces derniers par voie chimique et/ou physico-chimique afin d'atteindre la stabilité d'état macroscopique du matériau photochromique **2** souhaitée. Une telle phase d'élimination des agents non réduits par l'insolation peut notamment se faire par traitement de la couche photochromique à l'aide d'une solution aqueuse à base d'un thiosulfate.

Conformément à une autre caractéristique préférée du procédé de l'invention, il est également possible de prévenir la photo-oxydation non voulue des agents **2b** réduits lors de l'insolation par adjonction d'entités chimiques de protection tels que des agents secondaires de type thiol à longue chaîne carbonée.

Dans la continuité du procédé de texturation aléatoire d'un matériau photochromique précédemment décrit, l'invention concerne et propose également dans un deuxième objet un procédé de génération d'un nouvel agencement aléatoire des agents photosensibles **2b** réduits après une première insolation dans la matrice **2a** stable et poreuse du matériau photochromique **2** de l'élément matériel sujet **1** dont on a modifié de façon aléatoire les structures microscopique et macroscopique par une première insolation lumineuse.

L'invention propose ainsi en d'autres termes un procédé d'effacement d'une première texture du matériau photochromique **2** lors d'une première insolation, puis de génération d'une nouvelle texture par une nouvelle insolation à l'aide d'un champ lumineux variable spatialement.

Conformément à l'invention, cet effacement peut être réalisé par insolation de l'élément matériel **1** photochromique au moyen d'un faisceau lumineux dont le spectre est situé au moins partiellement dans le domaine visible. Une fois la texture aléatoire antérieure (résultant de l'agencement aléatoire des agents photosensibles dans la matrice) effacée, il suffit de procéder à une nouvelle insolation du matériau photochromique **2** de l'élément matériel sujet **1** par un champ lumineux fortement variable dans le domaine ultra-violet pour inscrire une nouvelle figure dans le matériau photochromique et ainsi procurer une nouvelle texture et un nouvel agencement aléatoires des agents photosensibles dans la matrice du matériau photochromique.

L'invention propose donc également la possibilité, grâce à ce procédé d'effacement et de génération d'une nouvelle texture aléatoire du matériau photochromique, de modifier de manière inopinée et de manière non totalement maîtrisée l'état macroscopique aléatoire de l'élément matériel sujet **1** sans modification de la matrice **2a** du matériau photochromique **2** de cet élément sujet **1.**

Après effacement d'un agencement aléatoire antérieur des agents photosensibles **2b** au sein de la matrice **2a** du matériau photochromique **2** la génération d'un nouvel état macroscopique aléatoire dudit matériau **2** à partir d'une même figure donnée ou d'une figure différente dépend de l'élément matériel sujet **1,** et plus particulièrement de son matériau photochromique **2** et le cas échéant de ses états macroscopiques antérieurs.

L'utilisation d'une figure donnée soit sur un élément matériel sujet **1** donné à deux instants d'insolation différents soit sur deux éléments matériels sujets différents conduit à des agencements aléatoires des agents photosensibles **2b** dans la matrice **2a** du matériau photochromique **2** différents.

De plus, un changement d'élément matériel intermédiaire **5** ou la variation plus ou moins importante des conditions d'illumination de cet élément par le faisceau lumineux **6** d'insolation provoque également de fortes variations de l'agencement aléatoire des agents photosensibles **2b** dans la matrice **2a** du matériau photochromique **2** de l'élément matériel sujet **1** après effacement d'une première texture aléatoire dans ce matériau.

Les deux procédés précédemment décrits dans le cadre de la présente invention trouvent des débouchés et applications particulièrement avantageux dans le domaine de l'identification ou l'authentification de données ou de marchandises, et plus largement le domaine de la sécurisation basée sur l'exploitation des propriétés de la matière.

C'est pourquoi un troisième objet de la présente invention concerne un procédé de sécurisation et/ou d'authentification de donnée(s) ou d'objet(s) qui exploite l'état macroscopique aléatoire conféré à un élément matériel sujet **1** comprenant un matériau photochromique **2** suivant l'un des procédés décrits précédemment.

Selon le procédé de sécurisation de l'invention, on fait l'acquisition de la texture aléatoire produite dans le matériau photochromique **2** d'un élément matériel sujet **1** avec un dispositif d'acquisition 3D, 2D ou 1D adapté, par exemple au moins une caméra à capteur CMOS ou CCD, et on extrait ensuite le cas échéant une signature, elle-même aléatoire, à partir de l'image de la texture aléatoire de l'élément matériel sujet **1,** et plus exactement de la surface de matériau photochromique préalablement acquise de celui-ci.

La texture aléatoire et/ou la signature extraite constituent ainsi des identificateurs infalsifiables de l'élément matériel sujet **1** et, le cas échéant, utilisables pour sécuriser des données éventuellement associées à l'élément matériel sujet. Cette texture et/ou signature extraite présentent la particularité de représenter l'élément matériel sujet **1** donné dans un état macroscopique aléatoire figé à un instant précis qu'est celui de son insolation, éventuellement temporairement jusqu'à transition vers un nouvel état macroscopique aléatoire acquis après effacement et nouvelle insolation.

Afin de pouvoir exploiter une telle texture aléatoire à des fins de vérification d'objets ou de données sécurisés par le procédé de l'invention, il convient dès la formation d'une texture aléatoire sur un élément matériel sujet donné d'enregistrer, selon un protocole sécurisé par exemple, la texture aléatoire et/ou de la signature extraite. Cet enregistrement servira(ont) de référence, soit dans une base de données sécurisée soit sur l'élément matériel sujet lui même par inscription après chiffrement, de la référence. Par la suite, il sera ainsi possible de vérifier, par des moyens de lecture appropriés, si la texture et/ou la signature extraite à un moment T de vérification correspond à la référence enregistrée à l'origine, et ainsi valider ou non l'identité de l'objet ou déchiffrer des données, vérifier leur intégrité, leur origine par une texture aléatoire conformément aux procédés de l'invention.

Selon une caractéristique avantageuse du procédé de sécurisation de l'invention, l'état macroscopique aléatoire de l'élément matériel sujet **1** peut être auto-reconfigurable en extrayant de cet état macroscopique aléatoire une signature non prédictible au sens du brevet FR 2 866 139, et selon des procédés décrit dans ce brevet, et en l'utilisant après normalisation via une table de correspondance pour choisir un jeu de paramètres d'illumination de l'élément matériel secondaire **5** pour générer une nouvelle texture aléatoire du matériau photochromique de l'élément matériel sujet.

Afin de rendre plus concrète la faisabilité des procédés de l'invention, un exemple concret de mise en oeuvre de ces procédés est présenté ci-après.

L'invention reposant sur la modification de structure d'un matériau photochromique par insolation lumineuse, il convient de choisir dans un premier temps ce matériau, qu'on apposera ensuite sur un élément matériel sujet **1** à identifier ou sécuriser.

De façon préférée dans le cadre de l'invention, le matériau photochromique **2** utilisé pour supporter des variations d'états macroscopiques aléatoires et permettre leur transition est une couche mince de dioxyde de titane TiO₂ mésoporeux, constituant la matrice **2a** du matériau **2,** et contenant des ions argent Ag⁺, qui constituent les agents photosensibles **2b.** Cette couche de TO₂ mésoporeux contenant des ions Ag⁺ est élaborée de préférence par voie sol-gel. La couche obtenue est homogène et incolore à l'échelle d'observation (supérieure à la centaine de nanomètres en microscopie optique).

L'état microscopique de la couche **2** obtenue est représenté schématiquement sur la **figure 4****.** On y distingue la matrice solide **2a** de TiO₂ poreuse, dont les pores ont une taille nanométrique et une distribution de tailles très étroite, et contenant les agents photosensibles **2b** d'argent Ag⁺, ces derniers étant répartis aléatoirement dans la matrice **2a** de façon non contrôlée et non prédictible. La taille des pores et des agents est suffisamment faible pour qu'ils soient invisibles à l'échelle macroscopique.

Ce type de matériau **2** présente des propriétés photochromiques bien connues permettant une coloration locale réversible, sous faisceau lumineux **6,** du matériau dans sa masse.

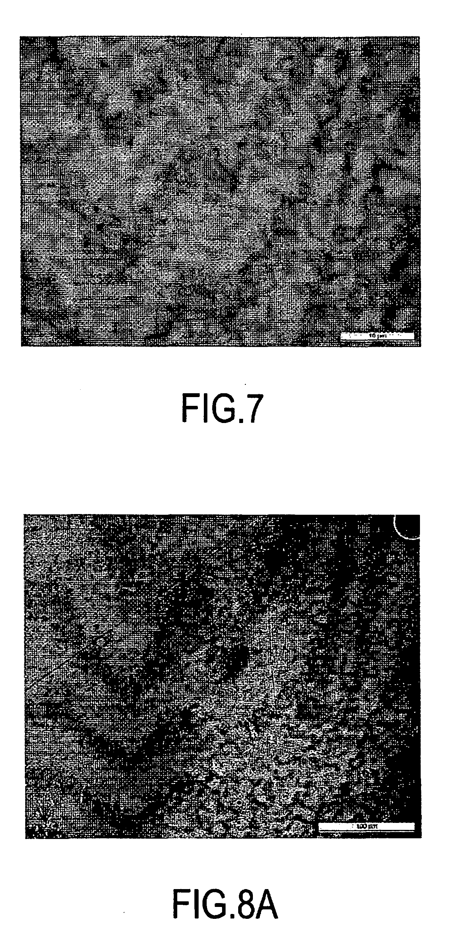

Le matériau **2** initial, incolore; prend une coloration jaunâtre en réflexion à l'échelle d'observation après illumination par une radiation lumineuse UV. La **figure 7** illustre les variations de couleur aléatoires obtenues après une insolation de l'échantillon du matériau **2** obtenu précédemment pendant 30 secondes avec un laser **6** émettant à la longueur d'onde de 244 nm une puissance de 60 mW, diffusée par une surface rugueuse. Cette coloration est due à la résonance plasmon des nanoparticules d'argent formées dans la couche par photo-réduction des précurseurs ioniques.

A l'échelle microscopique, comme représenté sur la **figure 5****,** les nanoparticules d'argent formées sous excitation lumineuse UV, croissent préférentiellement dans les pores de la matrice **2a** qui tendent à limiter leur taille. La faible dispersion en taille des nanoparticules se traduit par une coloration jaune caractéristique d'un spectre d'absorption de largeur limitée dans le domaine du visible.

La génération d'un état macroscopique aléatoire dans le matériau s'opère en insolant l'échantillon au moyen d'une figure de tavelures, elle-même obtenue en illuminant un élément matériel intermédiaire **5** diffusant, tel qu'un verre de silice dépoli, par un faisceau laser **6** émettant à la longueur d'onde 244 nm. La figure de tavelures générée par l'illumination de l'élément diffusant **5** est impossible ou quasi-impossible à reproduire sans cet élément diffusant, lequel est lui-même impossible ou quasi-impossible à reproduire physiquement.

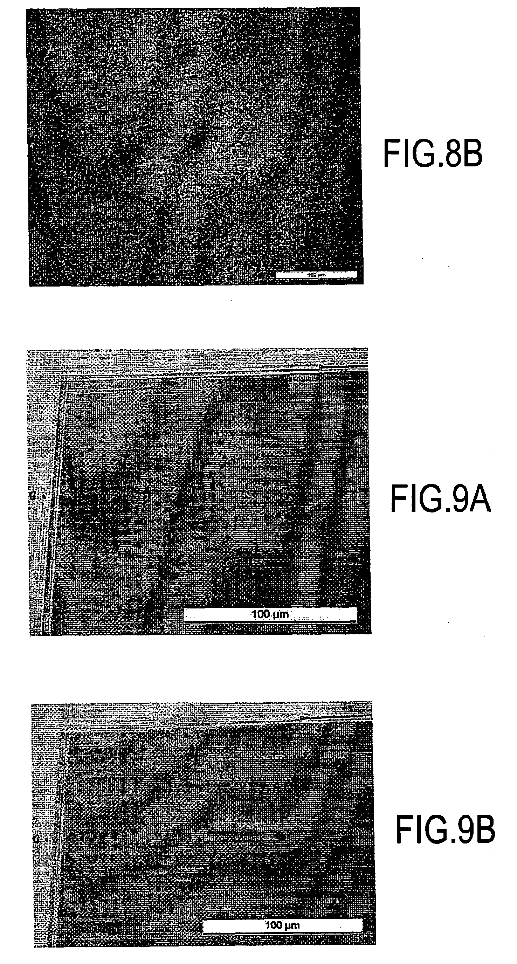

Le dispositif d'inscription représenté sur la **figure 6** comprend la source laser **S,** l'élément diffusant **5** et le matériau photochromique **2** sur l'élément matériel sujet **1** à identifier ou sécuriser par exemple. Il peut aussi inclure des optiques de focalisation et d'imagerie placées de part et d'autre de l'élément diffusant **5.** La résolution de la figure de tavelures est modifiable, par exemple en changeant la distance entre l'élément diffusant **5** et l'élément matériel sujet **1.** La résolution peut ainsi être adaptée à l'échelle d'observation. Les **figures 8A** et **8B** montrent deux figures de tavelures inscrites présentant des dimensions caractéristiques différentes et observées à la même échelle.

L'insolation du matériau par une lumière **6** laser modulée par l'élément diffusant **5** donc de manière aléatoire à l'échelle d'observation induit d'une part la migration des ions Ag⁺ vers les zones recevant le plus d'intensité lumineuse et d'autre part la croissance des nanoparticules d'argent réduites dans ces zones. Ces phénomènes se traduisent à l'échelle d'observation par la formation de taches de coloration jaunâtre (taches plus claires sur les figures) dont la forme et l'étendue dépendent à la fois de la figure de tavelures projetée et de la concentration en ions Ag⁺ présents localement dans les zones de plus forte intensité. Les zones non colorées sont caractéristiques de l'absence d'argent réduit et sont aussi relativement vidées de précurseurs.

A l'issue de la première insolation du matériau la distribution spatiale des nanoparticules d'argent et des ions argents le cas échéant non réduits dans la matrice **2a** de la couche **2** devient donc inhomogène à l'échelle d'observation.

Par ailleurs, comme le propose le procédé de texturation aléatoire de l'invention, une stabilisation vis-à-vis de la réduction non voulue des ions argent Ag⁺ non réduit peut être faite par rinçage dans une solution aqueuse contenant un thiosulfate. De façon analogue, une stabilisation vis-à-vis de l'oxydation non voulue de l'argent réduit peut être faite par un agent de type thiol à longue chaîne carbonée.

Conformément au procédé de génération d'une nouvelle texture aléatoire de l'invention, le matériau photochromique **2** reprend son aspect incolore (en transmission) initial après une insolation par un faisceau de lumière visible homogène. Cette insolation s'opère à l'aide d'un faisceau laser, de longueur d'onde appartenant à la bande d'absorption du matériau après insolation UV, soit typiquement autour de 488 nm ou 514 nm, et présentant une densité de puissance typiquement de l'ordre du W.mm⁻². Le temps d'exposition nécessaire à l'effaçage complet de la texture aléatoire, le cas échéant du code inscrit antérieur est typiquement de l'ordre de la minute et dépend des conditions utilisées lors de l'écriture de la figure de tavelures inscrite par la première insolation en lumière UV.

Les figures **9A** et **9B** montrent deux images prises au même endroit avant et après une insolation à 488 nm. La distribution de taches aléatoire de l'image **9A** a été obtenue en insolant la couche photosensible pendant 2 min à la longueur d'onde de 244 nm en utilisant une puissance en sortie de laser de 100 mW et un échantillon diffusant placé à 3,7 cm du matériau photosensible. Cette distribution de taches est totalement effacée (**figure 9B**) après une insolation homogène de la zone à la longueur d'onde de 488 nm pendant 2 minutes en utilisant une puissance de 1 W/mm².

La disparition de la couleur est due à l'oxydation (et dissolution) des nanoparticules d'argent formées lors de l'étape d'inscription. Cette oxydation (et dissolution) est rendue possible par l'effet photocatalytique du TiO₂ et par la présence d'oxygène dans la matrice avec lequel les nanoparticules d'argent formées lors de l'insolation sous lumière à 244 nm de longueur d'onde échangent des électrons. Cette oxydation (et dissolution) ne remet pas complètement en cause le caractère inhomogène de la répartition de l'argent dans la couche induit par l'exposition UV précédente.

Le cycle de formation (génération de l'état macroscopique aléatoire), oxydation/dissolution des nanoparticules (effaçage de l'état macroscopique aléatoire) peut être répété afin de réaliser une transition d'état macroscopique aléatoire. Une série de cinq cycles a été réalisée démontrant l'écriture possible de cinq distributions aléatoires de taches différentes au même endroit sur un échantillon comme représenté sur la **figure 12.**

En cas de stabilisation préalable vis à vis de la réduction non voulue de l'argent non réduit, il est nécessaire de recharger en sel d'argent la matrice de TiO₂ du matériau photochromique. En cas de stabilisation préalable vis-à-vis de l'oxydation non voulue de l'argent réduit, l'agent de type thiol à longue chaîne carbonée peut être décomposé sous l'effet d'une insolation UV en présence de la matrice de TiO₂.

La génération d'un état macroscopique aléatoire à partir d'une figure de tavelures donnée dépend de l'élément matériel sujet, et plus particulièrement de sa partie photochromique, et le cas échéant des transitions d'états macroscopiques antérieures. L'utilisation d'une figure de tavelures donnée, soit sur un élément matériel sujet donné à deux instants de génération différents, soit sur deux éléments matériels sujets différents, conduit à des tavelures inscrites différentes et voisines. Le changement d'élément secondaire ou la variation plus ou moins importante des conditions d'illumination de l'élément secondaire provoque une transition d'état macroscopique aléatoire telle que états macroscopiques avant et après transition sont fortement différents et indépendants.

Il est par ailleurs possible de limiter spatialement la photo-inscription d'une figure de tavelure au moyen d'un masque constitué par exemple d'un diaphragme de taille (et éventuellement de forme) réglable(s), placé dans le champ lumineux **3** d'insolation en amont de l'élément matériel sujet **1.**

La texturation aléatoire d'une tache donnée d'un code graphique inscrit dans plusieurs zones connexes du matériau photochromique **2** sur un élément matériel sujet **1** peut être réalisée en translatant le diaphragme dans un champ de tavelures suivant, en transversal, la position latérale souhaitée pour la tache et, en profondeur, typiquement quelques millimètres/centimètres, la taille moyenne souhaitée pour les tavelures de la tache. Pour une observation au microscope optique et une acquisition sur caméra matricielle avec une résolution de 0.25 µm/pixel, la photo-inscription de taches d'une dizaine de micromètres permet la lecture d'un code graphique de type «datamatrix» avec une quantification de la taille moyenne des tavelures imagées sur au moins une dizaine de niveaux. Ainsi la texturation d'un tel code graphique, bidimensionnel à l'origine, rend le code tridimensionnel.

## Revendications

1. Procédé de texturation aléatoire d'un élément matériel **(1)** comportant un matériau photochromique **(2)** comprenant une matrice stable **(2a)** au sein de laquelle sont réparties de façon chaotique des agents **(2b)** photosensibles, **caractérisé en ce que** l'on insole le matériau photochromique **(2)** au moyen d'un champ lumineux variable **(3)** et aléatoire provoquant la réduction des agents photosensibles **(2b)** au sein de la matrice **(2a)** et leur migration aléatoire pour atteindre un nouvel agencement aléatoire desdits agents photosensibles dans ladite matrice.

2. Procédé selon la revendication 1, **caractérisé en ce que** le champ lumineux d'insolation **(3)** de l'élément matériel **(1)** photochromique résulte de la lumière transmise et/ou réfléchie par un élément matériel intermédiaire **(5)** placé sur le chemin optique d'un faisceau lumineux incident **(6)** et dont les caractéristiques physiques font varier spatialement l'intensité du champ lumineux **(3).**

3. Procédé selon la revendication 1 ou la revendication 2, **caractérisé en ce que** le champ lumineux variable et aléatoire peut également résulter de la lumière transmise et/ou réfléchie par un système optique et/ou numérique utilisant une clé matérielle ou numérique.

4. Procédé selon la revendication 2, **caractérisé en ce que** le faisceau lumineux incident **(6)** est un faisceau de lumière cohérente ou quasi-cohérente, le champ lumineux d'insolation **(3)** résultant étant un champ de tavelures.

5. Procédé selon la revendication 2, **caractérisé en ce que** le faisceau lumineux incident **(6)** est un faisceau de lumière incohérente structurée.

6. Procédé selon l'une des revendications 1 à 5, **caractérisé en ce que** l'on fait varier l'intensité spatialement et/ou la divergence du champ lumineux d'insolation **(3)** par l'intermédiaire d'un système optique.

7. Procédé selon l'une des revendications 1 à 6, **caractérisé en ce que** l'insolation de l'élément matériel photochromique **(1)** est effectuée au moyen d'un champ lumineux **(3)** dont le spectre est au moins partiellement situé dans le domaine ultra-violet.

8. Procédé selon l'une des revendications 1 à 7, **caractérisé en ce que** l'on stabilise, le cas échéant, l'agencement aléatoire des agents photosensibles **(2b)** dans l'élément matériel photochromique après insolation d'une part par un traitement chimique et/ou physique destiné à éliminer les agents photosensibles non réduits et/ou d'autre part par un traitement physique et/ou chimique destiné à protéger les agents photosensibles réduits de rayonnements lumineux parasites.

9. Procédé selon l'une des revendications 1 à 8, **caractérisé en ce que** l'élément matériel photochromique **(1)** comporte une matrice **(2a)** d'oxyde de titane (TiO2) poreux dont la taille des pores est inférieure à 10² nanomètres et contenant des agents photosensibles **(2b)** tels que des sels d'argent, d'or ou de platine, ou encore des complexes d'argent.

10. Procédé de génération d'un nouvel agencement aléatoire d'agents photosensibles **(2b)** réduits dans une matrice stable **(2a)** d'un élément matériel **(1)** photochromique dont la structure à été modifiée selon le procédé de texturation aléatoire des revendications 1 à 9, **caractérisé en ce que** l'on efface l'agencement aléatoire d'agents photosensibles réduits obtenu après une première insolation de l'élément matériel photochromique et **en ce que** l'on procède à une nouvelle insolation à l'aide d'un champ lumineux variable spatialement.

11. Procédé de génération d'un nouvel agencement aléatoire selon la revendication 10, **caractérisé en ce que** l'on efface l'agencement aléatoire antérieur des agents photosensibles réduits par insolation de l'élément matériel photochromique au moyen d'un faisceau lumineux dont le spectre est situé au moins partiellement dans le domaine visible.

12. Procédé de génération d'un nouvel agencement aléatoire selon l'une des revendications 10 ou 11, **caractérisé en ce que**, avant l'effacement, on élimine le cas échéant la protection des agents photosensibles réduits préalablement introduite lors de la stabilisation desdits agents effectuées conformément au procédé de la revendication 8 et/ou on recharge la matrice de l'élément matériel photochromique en agents photosensibles non réduits notamment suite à une élimination de tels agents lors de la stabilisation selon la revendication 8.

13. Procédé de sécurisation et/ou d'authentification de donnée(s) ou d'objet(s) dans lequel :
a) on inscrit une figure d'un champ lumineux variable spatialement au sein d'un élément matériel photochromique conformément au procédé de texturation aléatoire défini à l'une des revendications 1 à 9, ladite figure étant déformée selon l'agencement des agents photosensibles et conférant une texture aléatoire à l'élément matériel photochromique ;
b) on sonde l'élément matériel photochromique ;
c) on extrait un signal ou une image de la texture aléatoire et/ou une signature de cette texture pour sécuriser un objet et/ou des données.

14. Procédé de sécurisation et/ou authentification selon la revendication 13, dans lequel à l'étape c) on enregistre le signal ou l'image de la texture aléatoire et/ou la signature extraite comme référence dans une base de données et/ou sur l'élément matériel photochromique ou encore sur un objet à sécuriser et/ou authentifier, puis :
- on sonde à nouveau l'élément matériel photochromique;
- on forme un signal ou une image de la texture aléatoire et/ou une signature extraite;
- on compare le signal ou l'image de la texture aléatoire et/ou la signature extraite au signal ou à l'image de la texture aléatoire et/ou à la signature extraite enregistré en référence pour authentifier l'objet.

15. Procédé de sécurisation et/ou d'authentification selon la revendication 14 dans lequel l'étape d'enregistrement et/ou d'authentification se fait selon un protocole sécurisé.

16. Procédé de sécurisation et/ou authentification de données ou d'objet(s) selon la revendication 13 ou 14 dans lequel on reconfigure le matériau photochromique par effacement de la texturation aléatoire antérieure de l'élément matériel photochromique selon le procédé des revendications 10 à 12 puis on procède aux étapes a) à c).

17. Procédé de sécurisation et/ou d'authentification selon l'une des revendications 13 à 16, dans lequel on extrait une signature aléatoire de l'agencement aléatoire des agents photosensibles réduits dans l'élément matériel photochromique, la signature aléatoire constituant une clé ou un paramètre de fonction cryptographique(s) et/ou stéganographique(s).

18. Procédé de sécurisation et/ou d'authentification selon l'une des revendications 13 à 17, dans lequel le matériau photochromique est déposé sur une partie au moins d'un objet à sécuriser et/ou authentifier.

19. Code graphique composé d'un arrangement d'éléments unitaires déterminé, **caractérisé en ce qu'**au moins un élément unitaire est texturé conformément au procédé des revendications 1 à 9.

## Claims

1. A method for random texturing of a physical component **(1)** including a photochromatic material **(2)** comprising a stable matrix **(2a)** within which photosensitive agents **(2b)** are chaotically distributed, **characterized in that** the photochromatic material **(2)** is exposed by a variable and random light field **(3)** causing a reduction in the photosensitive agents **(2b)** within the matrix **(2a)** and their random migration to reach a new random arrangement of said photosensitive agents in said matrix.

2. The method according to claim 1, **characterized in that** the light exposure field **(3)** of the photochromatic physical component **(1)** results from the light transmitted and/or reflected by an intermediate physical component **(5)** placed on the optical path of an incident light beam **(6)** and whereof the physical characteristics cause the intensity of the light field **(3)** to vary spatially.

3. The method according to claim 1 or claim 2, **characterized in that** the variable and random light field can also result from the light transmitted and/or reflected by an optical and/or digital system using a physical or digital key.

4. The method according to claim 2, **characterized in that** the incident light beam **(6)** is a coherent or quasi-coherent light beam, the resulting light exposure field **(3)** being a speckled field.

5. The method according to claim 2, **characterized in that** the incident light beam **(6)** is a structured incoherent light beam.

6. The method according to one of claims 1 to 5, **characterized in that** the intensity is varied spatially and/or the divergence of the light exposure field **(3)** is varied using an optical system.

7. The method according to one of claims 1 to 6, **characterized in that** the exposure of the photochromatic physical component **(1)** is done using a light field **(3)** whereof the spectrum is at least partially situated in the ultraviolet domain.

8. The method according to one of claims 1 to 7, **characterized in that** if necessary, the random arrangement of the photosensitive agents **(2b)** is stabilized in the photochromatic physical component after exposure on the one hand through a chemical and/or physical treatment designed to eliminate the non-reduced photosensitive agents and/or on the other hand through a physical and/or chemical treatment designed to protect the reduced photosensitive agents from parasitic light rays.

9. The method according to one of claims 1 to 8, **characterized in that** the photochromatic physical component **(1)** includes a matrix **(2a)** of porous titanium dioxide (Ti02) whereof the size of the pores is smaller than 10² nanometers and containing photosensitive agents **(2b)** such as silver, gold or platinum salts, or silver complexes.

10. A method for generating a new random arrangement of reduced photosensitive agents **(2b)** in a stable matrix **(2a)** of a photochromatic physical component **(1)** whereof the structure has been modified using the random texturing method according to claims 1 to 9, **characterized in that** the random arrangement of reduced photosensitive agents obtained after a first exposure of the photochromatic physical component is erased and **in that** a new exposure is done using a spatially variable light field.

11. The method for generating a new random arrangement according to claim 10, **characterized in that** the prior random arrangement of the reduced photosensitive agents is erased by exposure of the photochromatic physical component using a light beam whereof the spectrum is at least partially situated in the visible domain.

12. The method for generating a new random arrangement according to one of claims 10 or 11, **characterized in that**, before the erasure, if necessary, the protection of the reduced photosensitive agents that was previously introduced during the stabilization of said agents done according to the method of claim 8 is eliminated and/or the matrix of the photochromatic physical component is recharged with non-reduced photosensitive agents, in particular following an elimination of such agents during the stabilization according to claim 8.

13. A method for securing and/or authenticating data or objects in which:
a) a diagram of a spatially variable light field is inscribed within a photochromatic physical component according to the random texturing method defined in one of claims 1 to 9, said diagram being deformed according to the arrangement of the photosensitive agents and imparting a random texture to the photochromatic physical component;
b) the photochromatic physical component is probed;
c) a signal or image is extracted from the random texture and/or a signature of that texture to secure an object and/or data.

14. The securing and/or authentication method according to claim 13, wherein in step c) the signal or image from the random texture and/or the extracted signature is recorded as reference in a database and/or on the photochromatic element or on an object to be secured and/or authenticated, then:
- the photochromatic physical component is probed again;
- a signal or an image of the random texture and/or an extracted signature is formed;
- the signal or the image of the random texture and/or the signature extracted from the signal or the image of the random texture and/or the extracted signature is recorded as reference to authenticate the object.

15. The securing and/or authentication method according to claim 14, wherein the recording and/or authentication step is done using a secure protocol.

16. The method for securing and/or authenticating data or objects according to claim 13 or 14, wherein the photochromatic material is reconfigured by erasing the prior random texturing of the photochromatic material using the method according to claims 10 to 12, then steps a) to c) are carried out.

17. The securing and/or authentication method according to one of claims 13 to 16, wherein a random signature is extracted from the random arrangement of the reduced photosensitive agents in the photochromatic material, the random signature making up a key or a parameter with a cryptographic and/or steganographic function.

18. The securing and/or authentication method according to one of claims 13 to 17, wherein the photochromatic material is deposited on at least part of an object to be secured and/or authenticated.

19. A graphic code made up of an arrangement of predetermined unitary components, **characterized in that** at least one unitary component is textured according to the method of claims 1 to 9.

## Patentansprüche

1. Verfahren zum zufälligen Texturieren eines materiellen Elements (1), das ein photochromes Material (2) mit einer stabilen Matrix (2a) umfaßt, innerhalb derer lichtempfindliche Stoffe (2b) chaotisch verteilt sind, **dadurch gekennzeichnet, daß** das photochrome Material (2) mittels eines veränderlichen und zufälligen Leuchtfeldes (3) belichtet wird, das die Reduktion der lichtempfindlichen Stoffe (2b) innerhalb der Matrix (2a) sowie deren zufällige Wanderung bewirkt, um eine neue Zufallsanordnung der lichtempfindlichen Stoffe in der Matrix zu erreichen.

2. Verfahren nach Anspruch 1, **dadurch gekennzeichnet, daß** das Leuchtfeld zum Belichten (3) des photochromen materiellen Elements (1) aus dem Licht resultiert, das durch ein materielles Zwischenelement (5), welches auf dem Lichtweg eines einfallenden Lichtstrahls (6) angeordnet ist und dessen physikalische Eigenschaften die Intensität des Leuchtfeldes (3) räumlich verändern, durchgelassen und/oder reflektiert wird.

3. Verfahren nach Anspruch 1 oder Anspruch 2, **dadurch gekennzeichnet, daß** das veränderliche und zufällige Leuchtfeld auch aus dem Licht resultieren kann, das durch ein einen materiellen oder digitalen Schlüssel verwendendes optisches und/oder digitales System durchgelassen und/oder reflektiert wird.

4. Verfahren nach Anspruch 2, **dadurch gekennzeichnet, daß** der einfallende Lichtstrahl (6) ein Strahl kohärenten oder quasi-kohärenten Lichts ist, wobei das resultierende Belichtungsleuchtfeld (3) ein Speckle-Feld ist.

5. Verfahren nach Anspruch 2, **dadurch gekennzeichnet, daß** der einfallende Lichtstrahl (6) ein Strahl inkohärenten, strukturierten Lichts ist.

6. Verfahren nach einem der Ansprüche 1 bis 5, **dadurch gekennzeichnet, daß** die Intensität räumlich und/oder die Divergenz des Belichtungsleuchtfeldes (3) mittels eines optischen Systems verändert werden.

7. Verfahren nach einem der Ansprüche 1 bis 6, **dadurch gekennzeichnet, daß** die Belichtung des photochromen materiellen Elements (1) mittels eines Leuchtfeldes (3) vollzogen wird, dessen Spektrum wenigstens teilweise im UV-Bereich liegt.

8. Verfahren nach einem der Ansprüche 1 bis 7, **dadurch gekennzeichnet, daß** gegebenenfalls die Zufallsanordnung der lichtempfindlichen Stoffe (2b) in dem photochromen materiellen Element nach der Belichtung einerseits durch eine chemische und/oder physikalische Behandlung, die dazu bestimmt ist, die nicht reduzierten lichtempfindlichen Stoffe zu beseitigen, und/oder anderseits durch eine physikalische und/oder chemische Behandlung, die dazu bestimmt ist, die reduzierten lichtempfindlichen Stoffe vor Störlichtstrahlungen zu schützen, stabilisiert wird.

9. Verfahren nach einem der Ansprüche 1 bis 8, **dadurch gekennzeichnet, daß** das photochrome materielle Element (13 eine Matrix (2a) aus porösem Titandioxid (TiO₂) umfaßt, deren Porengröße unter 10² Nanometern liegt und die lichtempfindliche Stoffe (2b), wie Silber-, Gold- oder Platinsalze oder aber Süberkomplexe enthält.

10. Verfahren zum Erzeugen einer neuen Zufallsanordnung von reduzierten lichtempfindlichen Stoffen (2b) in einer stabilen Matrix (2a) eines photochromen materiellen Elements (1), dessen Struktur nach dem Verfahren zum zufälligen Texturieren der Ansprüche 1 bis 9 verändert worden ist, **dadurch gekennzeichnet, daß** die Zufallsanordnung von reduzierten lichtempfindlichen Stoffen, die nach einer ersten Belichtung des photochromen materiellen Elements erhalten wird, gelöscht wird und daß eine erneute Belichtung mit Hilfe eines räumlich veränderlichen Leuchtfeldes durchgeführt wird.

11. Verfahren zum Erzeugen einer neuen Zufallsanordnung nach Anspruch 10, **dadurch gekennzeichnet, daß** die vorhergehende Zufallsanordnung der reduzierten lichtempfindlichen Stoffe durch Belichtung des photochromen materiellen Elements mittels eines Lichtstrahls, dessen Spektrum wenigstens teilweise im sichtbaren Bereich liegt, gelöscht wird.

12. Verfahren zum Erzeugen einer neuen Zufallsanordnung nach einem der Ansprüche 10 oder 11, **dadurch gekennzeichnet, daß** vor dem Löschen gegebenenfalls der Schutz der reduzierten lichtempfindlichen Stoffe, der zuvor bei der nach dem Verfahren des Anspruchs 8 vollzogenen Stabilisierung der Stoffe eingebracht wurde, entfernt wird und/oder die Matrix des photochromen materiellen Elements wieder mit nicht reduzierten lichtempfindlichen Stoffen, insbesondere im Anschluß an eine Entfernung derartiger Stoffe bei der Stabilisierung nach Anspruch 8, beladen wird.

13. Verfahren zur Sicherung und/oder Authentifizierung von Daten oder einem Objekt(en), wobei:
a) ein Muster eines räumlich veränderlichen Leuchtfeldes in ein photochromes materielles Element nach dem in einem der Ansprüche 1 bis 9 definierten Verfahren zum zufälligen Texturieren eingeschrieben wird, wobei das Muster entsprechend der Anordnung der lichtempfindlichen Stoffe verformt wird und dem photochromen materiellen Element eine Zufallstextur verleiht,
b) das photochrome materielle Element untersucht wird,
c) ein Signal oder ein Bild der Zufallstextur und/oder eine Signatur dieser Textur extrahiert wird, um ein Objekt und/oder Daten zu sichern.

14. Sicherungs- und/oder Authentifizierungsverfahren nach Anspruch 13, wobei bei Schritt c) das Signal oder das Bild der Zufallstextur und/oder die extrahierte Signatur als Referenz in einer Datenbank und/oder auf dem photochromen materiellen Element oder aber auf einem zu sichernden und/oder zu authentifizierenden Objekt gespeichert werden, anschließend:
- das photochrome materielle Element erneut untersucht wird,
- ein Signal oder ein Bild der Zufallstextur und/oder eine extrahierte Signatur gebildet werden,
- das Signal oder das Bild der Zufallstextur und/oder die extrahierte Signatur mit dem Signal oder mit dem Bild der Zufallstextur und/oder mit der extrahierten Signatur, das/die als Referenz gespeichert ist, verglichen werden, um das Objekt zu authentifizieren.

15. Sicherungs- und/oder Authentifizierungsverfahren nach Anspruch 14, wobei der Schritt der Speicherung und/oder Authentifizierung nach einem gesicherten Protokoll erfolgt.

16. Verfahren zur Sicherung und/oder Authentifizierung von Daten oder einem Objekt(en), nach Anspruch 13 oder 14, wobei das photochrome Material durch Löschen der vorhergehenden Zufallstextur des photochromen materiellen Elements nach dem Verfahren der Ansprüche 10 bis 12 neu konfiguriert wird, anschließend die Schritte a) bis c) durchgeführt werden.

17. Sicherungs- und/oder Authentifizierungsverfahren nach einem der Ansprüche 13 bis 16, wobei eine Zufallssignatur der Zufallsanordnung der reduzierten lichtempfindlichen Elemente in dem photochromen materiellen Element extrahiert wird, wobei die Zufallssignatur einen Schlüssel oder einen Parameter mit kryptographischer und/oder steganographischer Funktion bildet.

18. Sicherungs- und/oder Authentifizierungsverfahren nach einem der Ansprüche 13 bis 17, wobei das photochrome Material auf wenigstens einem Teil eines zu sichernden und/oder zu authentifizierenden Objekts abgeschieden wird.

19. Grafikcode, bestehend aus einer bestimmten Anordnung von Einzelelementen, **dadurch gekennzeichnet, daß** wenigstens ein Einzelelement nach dem Verfahren der Ansprüche 1 bis 9 texturiert ist.
